# EUROPEAN PATENT SPECIFICATION

(11) **EP 4 037 165 B1**
(45) Date of publication and mention of the grant of the patent: **03.07.2024**
(21) Application number: 20882454.0
(22) Date of filing: 09.06.2020
(51) Int. Cl.: H02K 15/03, H02K 15/14, H02K 15/16

(54) **CLAMPING ASSEMBLY AND METHOD OF ASSEMBLING A PERMANENT MAGNET MOTOR**
KLEMMANORDNUNG UND MONTAGEVERFAHREN FÜR PERMANENTMAGNETMOTOR
ENSEMBLE DE SERRAGE ET PROCÉDÉ D'ASSEMBLAGE POUR MOTEUR À AIMANT PERMANENT

(30) Priority: 28.10.2019 CN 201911033454
(43) Date of publication of application: 03.08.2022
(73) Proprietor: Goldwind Science & Technology Co., Ltd., Urumqi, Xinjiang 830026 (CN)
(72) Inventor: LI, Yanhui, Beijing 100176 (CN); PENG, Liang, Beijing 100176 (CN)
(74) Representative: Gulde & Partner
(86) International application number: PCT/CN2020/095061
(87) International publication number: WO 2021/082454

(56) References cited:
- EP-A1- 2 590 301
- EP-A1- 2 590 301
- WO-A1-2019/109587
- CN-A- 102 474 166
- CN-A- 107 947 501
- US-A- 5 952 746
- US-A1- 2012 032 546
- US-A1- 2014 028 138
- US-B2- 9 281 731

## Description

### TECHNICAL FIELD

The present application relates to a technical field of a motor, and particularly relates to a clamping assembly and a method of assembling a permanent magnet motor.

### BACKGROUND

A rotor of a permanent magnet motor usually adopts surface-attached magnetic pole units, and multiple pole units are arranged in columns in a circumferential direction of a rotor yoke, causing a large magnetic attraction force to be present at a predetermined air gap between the rotor and the stator, which increases the difficulty of assembly. Especially for a motor having a large diameter, in order to meet the road transportation limit, for example, no more than 5m, it is necessary to segment the stator and the rotor before transportation, and a large magnetic attraction force also exists at a predetermined air gap between each of the stator segment and the corresponding rotor segment after segmentation, thereby increasing the transportation difficulty and cost.

The document EP2590301A1 discloses a generator assembly, particularly for a wind turbine, having a generator with a segmented rotor comprising a number of rotor segments and a segmented stator comprising a number of stator segments, wherein radially oppositely disposed rotor and stator segments each comprise at least one reception portion for detachably receiving at least one connection means, with the connection means being adapted to detachably mechanically connect respective radially oppositely disposed rotor and stator segments to build stator-rotor- segm ent-units.

The document US2014028138A1 discloses a method for assembling an electrical machine. In the method, an inner segment is first pre-assembled on each of a number of outer segments by at least one fixing element, so as to produce a plurality of segment modules having each a predetermined air gap between the inner segment and the outer segment. The inner segments and the outer segments are assigned to the rotor or stator of the electrical machine. The inner segments of the plurality of segment modules are fastened to an inner assembly device. The outer segments of the plurality of segment modules are fastened to an outer assembly device. Finally, the fixing elements between the inner segments and the outer segments are removed.

The document US9281731B2 discloses a method for maintaining a machine having a rotor and a stator. In some embodiments, the machine includes a rotor and a stator segmented into multiple removable stator modules. During servicing, a stator-module replacement tool is precisely located in any one or more of multiple service positions corresponding to the multiple stator modules by selectively energizing the machine.

### SUMMARY

The object of the present application is to provide a clamping assembly and a method of assembling a permanent magnet motor, and the clamping assembly can be used for fixing the stator to the rotor during assembly, thereby avoiding the influence of the magnetic attraction force between the stator and the rotor on an air gap of the motor.

The invention is defined by the appended set of claims. The description that follows is subjected to this limitation. Any disclosure lying outside the scope of said claims is only intended for illustrative as well as comparative purposes.

In one aspect, the present application proposes a clamping assembly, according to claim 1.

In another aspect, the present application proposes a method of assembling a permanent magnet motor, according to claim 10.

In the clamping assembly and a method of assembling a permanent magnet motor provided by the present application, the stator and the rotor are preassembled coaxially by means of the first clamping member and/or the second clamping member such that a predetermined air gap is maintained between the stator and the rotor in the radial direction, thereby avoiding the influence of the magnetic attraction force between the stator and the rotor on the air gap, which improves the convenience of assembling the motor.

### BRIEF DESCRIPTION OF THE DRAWINGS

The present application can be better understood from the following description of the specific embodiments of the present application in conjunction with the accompanying drawings; herein, by reading the following detailed description of non-limiting embodiments with reference to the accompanying drawings, other features, objects, and advantages of the present application will become more apparent, and the same or similar reference signs indicate the same or similar features.
Fig. 1 is a structural schematic diagram of a permanent magnet motor provided by an embodiment of the present application;
Fig. 2 is a top schematic diagram of a structure of the permanent magnet motor shown in Fig. 1 with a main shaft removed;
Fig. 3 is a rear schematic diagram of a structure of the permanent magnet motor shown in Fig. 1 with the main shaft removed;
Fig. 4 is a cross-segmental schematic diagram of a structure of the permanent magnet motor shown in Fig. 2 in an A-A direction;
Fig. 5 is a structural schematic diagram of a first clamping member provided by an embodiment of the present application;
Fig. 6 is a cross-segmental schematic diagram of a structure of the permanent magnet motor shown in Fig. 3 in a B-B direction;
Fig. 7 is a structural schematic diagram of a second clamping member provided by an embodiment of the present application;
Fig. 8 is a schematic diagram of a partial exploded structure of stator segments and rotor segments of a large-diameter permanent magnet motor provided by an embodiment of the present application;
Fig. 9 is a structural schematic diagram of the main shaft of the permanent magnet motor in a method of assembling the permanent magnet motor shown in Fig. 1; and
Fig. 10 is a schematic diagram of the flow chart of a method of assembling the permanent magnet motor shown in Fig. 1.

### Description of reference signs:

S-stator; S11-first mounting surface; S12-second mounting surface; S'-stator segment; M-segment module; S1-first stator flange; S2-second stator flange;
R-rotor; R1-rotor bracket; R'-rotor segment; R11-mounting hole; R2-first rotor flange; R3-second rotor flange;
SF-main shaft; SF1-fixed shaft; SF2-rotating shaft; SF3-bearing; SF4-fixed shaft flange; SF5-rotating shaft flange;
1-first clamping member; 11-body portion; 111-opening; 112-bottom portion; 11a-first end portion; 11b-second end portion; 12-flange portion; 121-first positioning hole; 13-connecting portion; 131-first surface; 132-second surface; 133-second positioning hole;
2-second clamping member; 21-first fixing portion; 211-fourth positioning hole; 22-second fixing portion; 221-third positioning hole; 223-third surface; 224-fourth surface; 23-main body portion; 231-weight reduction groove.

### DETAILED DESCRIPTION

The features and exemplary embodiments of various aspects of the present disclosure will be described in detail below. Many specific details are disclosed in the following detailed description in order to fully understand the present disclosure. However, it is obvious to those skilled in the art that the present disclosure can be implemented without some of these specific details. The following description of the embodiments is merely to provide a better understanding of the present disclosure by showing examples of the present disclosure. The present disclosure is by no means limited to any specific configurations proposed below, but covers any modification, replacement and improvement of elements and components without departing from the present disclosure. In the drawings and the following description, well-known structures and technologies are not shown in order to avoid unnecessary obscurity of the present disclosure.

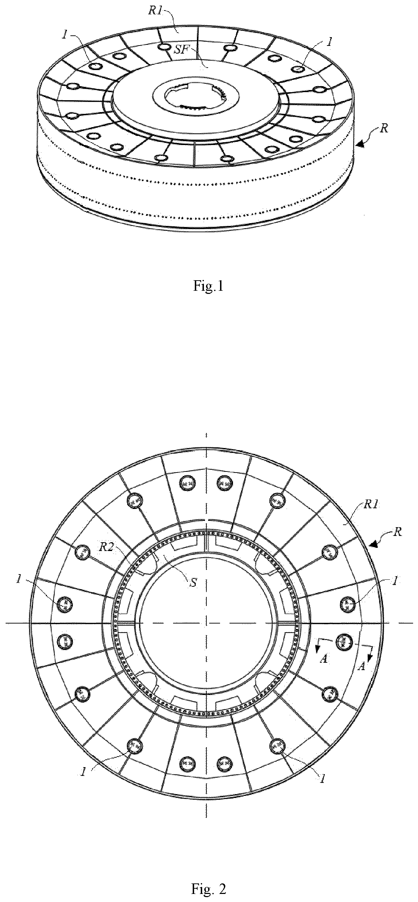

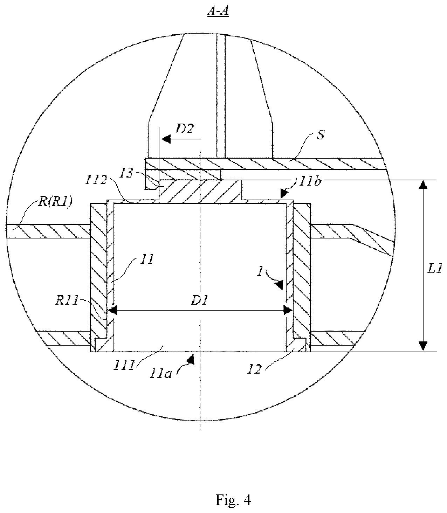

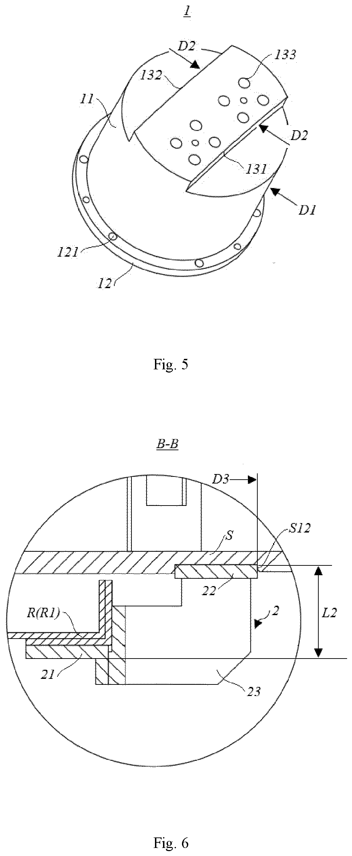

In order to better understand of the present application, a clamping assembly and a method of assembling a permanent magnet motor provided by the embodiments of the present application will be described in detail below in conjunction with Figs. 1 to 10.

With reference to Figs. 1 to 3 together, an embodiment of the present application provides a clamping assembly for fixing a stator S to a rotor R of a permanent magnet motor. The permanent magnet motor may have a structure of an inner stator and an outer rotor structure, that is, the rotor R is disposed on the outer periphery of the stator S, and the permanent magnet motor may also have a structure of an inner rotor and outer stator, that is, the stator S is disposed on the outer periphery of the rotor R. In the present application, the feature "radial direction" refers to a diameter direction of the permanent magnet motor, that is, a diameter direction of the stator and the rotor, the feature "axial direction" refers to a direction of a rotation axis of the permanent magnet motor, and the feature "circumferential direction" refers to a circumferential direction of the permanent magnet motor. In order to ease of description, the present application is described by taking a permanent magnet motor having a structure of an inner stator and an outer rotor as an example.

A large magnetic flux, accounting for about 80% of the total magnetic flux, exists at a predetermined air gap since a predetermined air gap is maintained between a stator core of the stator S and a magnetic pole module of the rotor R in the radial direction, and the static magnetic attraction force is proportional to the square of the magnetic flux, thereby resulting in a large magnetic attraction force at the predetermined air gap, which increases the difficulty of assembling the motor.

For a large motor, especially a megawatt-level wind turbine, the magnetic attraction force between the stator and rotor can reach several tons, therefore for the transportation and final mounting of the fully or partially assembled stator and rotor, a firm positioning device is required to be customized in order to ensure that the predetermined air gap is maintained before the normal operation of the motor without influencing the normal operation, and after repeated researches and simulations, the positioning device in a single form at a single location often does not meet the needs of positioning without deformation, therefore it is necessary to dispose a variety of forms of multiple fixing devices at different locations in order to ensure such positioning needs from multiple aspects.

In order to overcome the above problem, the present application provides multiple structural forms of positioning devices at multiple positions, thereby acting in concert to jointly ensure fixed positioning of the stator and the rotor of the large motor before normal operation, and preferably, the clamping assembly provided by an embodiment of the present application includes first clamping members 1 and second clamping members 2.

The first clamping members 1 connect a stator S with a rotor bracket R1 of the rotor R on an axial side of a permanent magnet motor. Specifically, the first clamping members 1 are disposed inside an air gap formed between the stator S and the rotor R in a radial direction, and limit a relative movement between the stator S and the rotor R in the radial direction, an axial direction, and a circumferential direction.

The second clamping members 2 connect the stator S with the rotor bracket R1 of the rotor R on the other axial side of the permanent magnet motor. Specifically, the second clamping members 2 are disposed in the vicinity of the air gap formed between the stator S and the rotor R in the radial direction, and limit the relative movement between the stator S and the rotor R in the radial direction, the axial direction, and the circumferential direction.

Herein, at least two first clamping members 1 and at least two second clamping members 2 are distributed in the circumferential direction of the stator S and the rotor R respectively, and are preferably evenly spaced.

At least two first clamping members 1 or at least two second clamping members 2 connect the stator S with the rotor bracket R1 of the rotor R on an axial side, or, at least two first clamping members 1 and at least two second clamping members 2 connect the stator S with the rotor bracket R1 of the rotor R on both axial sides respectively, thereby ensuring that a predetermined air gap is maintained between a stator core of the stator S and a magnetic pole module of the rotor R in the radial direction, which meets the requirement for the power of the permanent magnet motor.

In the clamping assembly provided by the embodiments of the present application, the stator S and the rotor R are coaxially preassembled by means of the first clamping members 1 and/or the second clamping members 2 such that the predetermined air gap is maintained between the stator S and the rotor R in the radial direction, thereby avoiding the influence of the magnetic attraction force between the stator S and the rotor R on the air gap, which improves the convenience of assembling the motor.

The specific structures of the first clamping members 1 and the second clamping members 2 will be described in detail below in conjunction with the accompanying drawings.

With reference to Figs. 2, 4, and 5 together, the first clamping member 1 is made by machining low carbon steel, ductile iron, cast steel, and other steel material after welding or casting it, and includes a body portion 11, a flange portion 12, and a connecting portion 13.

Herein, the body portion 11 is formed as a column structure, and has a first end portion 11a and a second end portion 11b opposite to each other in its axial direction.

The flange portion 12 is disposed on an outer peripheral surface of the body portion 11 corresponding to the first end portion 11a, and the first clamping members 1 is connected to the rotor bracket R1 by the flange portion 12.

The connecting portion 13 is disposed at the second end portion 11 b, and the first clamping member 1 is connected to the stator S by the connecting portion 13.

Further, in order to reduce the weight, the body portion 11 is a hollow column having an accommodating cavity, the first end portion 11a is provided with an opening 111 in communication with the accommodating cavity, the second end portion 11b is provided with a bottom portion 112 for forming the accommodating cavity, and the connecting portion 13 is provided to protrude outward from the bottom portion 112 in the axial direction.

Specifically, the flange portion 12 is provided with a plurality of first positioning holes 121 in the circumferential direction, the outer peripheral surface of the body portion 11 has a first diameter D1, the rotor bracket R1 is provided with a mounting hole R11 having the first diameter D1,the body portion 11 is inserted into the mounting hole R11, the outer peripheral surface of the body portion 11 and the mounting hole R11 of the rotor bracket R1 have high machining accuracy and are in clearance fit with each other, and the flange portion 12 is connected with the rotor bracket R1 by the first positioning hole 121.

The connecting portion 13 includes a first surface 131 and a second surface 132 disposed opposite to each other, and is further provided with a second positioning hole 133 in the axial direction, the first surface 131 is an arc-shaped surface recessed inward and having a second diameter D2, the stator S is provided with a first mounting surface S11 having the second diameter D2, and for the permanent magnet motor having the structure of the inner stator and the outer rotor structure, the first clamping member 1 is matched with the first mounting surface S11 via the first surface 131 having a high machining accuracy and is connected with the stator S via the second positioning hole 133.

The second surface 132 is an arc-shaped surface protruding outward and having a second diameter D2, and for the permanent magnet motor having the structure of the inner rotor and the outer stator, the first clamping member 1 is matched with the first mounting surface S11 via the second surface 132 and is connected with the stator S via the second positioning hole 133.

Further, a maximum length L1 of the first clamping member 1 in the axial direction is equal to a mounting distance between the stator S and the rotor bracket R1 in the axial direction. Herein, the maximum length L1 of the first clamping member 1 in the axial direction is a distance between an end surface of the flange portion 12 and an end surface of the connecting portion 13, which has a high machining accuracy, therefore the first clamping member 1 connects the stator S with the rotor bracket R1 on the an axial side of the stator S and the first clamping member 1 bears the magnetic attraction force between the stator S and the rotor R, thereby the stator S and the rotor R are fixed in the axial direction, the radial direction, and the circumferential direction and a constant predetermined air gap is maintained in the radial direction, which avoids the influence of the magnetic attraction between the stator S and the rotor R on the air gap, thereby improving the convenience of assembling the motor.

It should be noted that the first clamping member 1 is only used when assembling the stator S and the rotor R of the permanent magnet motor, so as to ensure that the air gap between the stator S and the rotor R is not influenced by the magnetic attraction force. After the permanent magnet motor is assembled, the limit of the first clamping members 1 on the movement between the stator S and the rotor R is released by, for example, moving, rotating, or flipping the first clamping members 1 to other positions relative to the stator, thereby meeting the requirement for the use of the permanent magnet motor. When the permanent magnet motor is subsequently reassembled after disassembly and maintenance, the first clamping member 1 can be mounted again to a position where it can connect the stator S with the rotor R so as to facilitate the assembly of the permanent magnet motor.

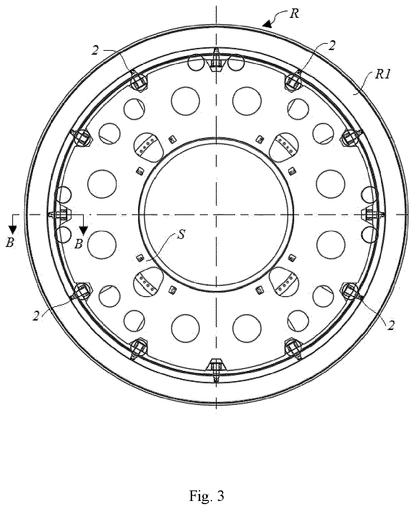

With reference to Figs. 3, 6, and 7 together, the second clamping member 2 is made by machining low carbon steel, ductile iron, cast steel, and other steel material after welding or casting it, and includes a main body portion 23, a first fixing portion 21, and a second fixing portion 22.

In order to reduce the weight, the main body portion 23 is provided with a weight reduction groove 231.

The first fixing portion 21 is connected to the main body portion 23, the first fixing portion 21 is a plate member, and the second clamping member 2 is connected to the rotor bracket R1 of the rotor R via the first fixing portion 21.

The second fixing portion 22 is connected to the main body portion 23, the second fixing portion 22 is a plate member parallel to and is spaced apart from the first fixing portion 21, and the second clamping member 2 is connected to the stator S via the second fixing portion 22.

Further, the second fixing portion 22 includes a third surface 223 and a fourth surface 224 disposed opposite to each other, the second fixing portion 22 is further provided with a third positioning hole 221, the third surface 223 is an arc-shaped surface recessed inward and having a third diameter D3, the stator S is provided with a second mounting surface S12 having a third diameter D3, and for the permanent magnet motor having the structure of the inner stator and the outer rotor, the second clamping member 2 is matched with the second mounting surface S12 via the third surface 223 having a high machining accuracy and is connected with the stator S via the third positioning hole 221.

The fourth surface 224 is an arc-shaped surface protruding outwards and having the third diameter D3, and for the permanent magnet motor having the structure of the inner rotor and the outer stator, the second clamping member 2 is matched with second mounting surface S12 via the fourth surface having higher machining accuracy and is connected with the stator S via the third positioning holes 221.

Further, the first fixing portion 21 is provided with a fourth positioning hole 211, and the first fixing portion 21 is connected to the rotor bracket R1 via the fourth positioning hole 211.

In addition, a maximum spacing distance L2 between the first fixing portion 21 and the second fixing portion 22 is equal to a mounting distance between the stator S and the rotor bracket R1 in the axial direction. The maximum spacing distance L2 between the first fixing portion 21 and the second fixing portion 22 has high machining accuracy, therefore the second clamping member 2 connects the stator S with the rotor bracket R1 on the other axial side of the stator S, and the second clamping member 2 bears the magnetic attraction force between the stator S and the rotor R, thereby realizing the fixation of the stator S to the rotor R in the axial direction, the radial direction, and the circumferential direction and maintaining a constant predetermined air gap between them in the radial direction, which avoids the influence of the magnetic attraction force between the stator S and the rotor R on the air gap and thus improves the convenience of assembling the motor.

It should be noted that the second clamping member 2 is only used when assembling the stator S and the rotor R of the permanent magnet motor so as to ensure that the air gap between the stator S and the rotor R is not influenced by the magnetic attraction force. After the permanent magnet motor is assembled, the limit of the second clamping members 2 on the movement between the stator S and the rotor R is released by, for example, moving, rotating, or flipping the second clamping members 2 to other positions relative to the stator, thereby meeting the requirement for the use of the permanent magnet motor. When the permanent magnet motor is subsequently reassembled after disassembly and maintenance, the second clamping member 2 can be mounted again to a position where it can connect the stator S with the rotor R so as to facilitate the assembly of the permanent magnet motor.

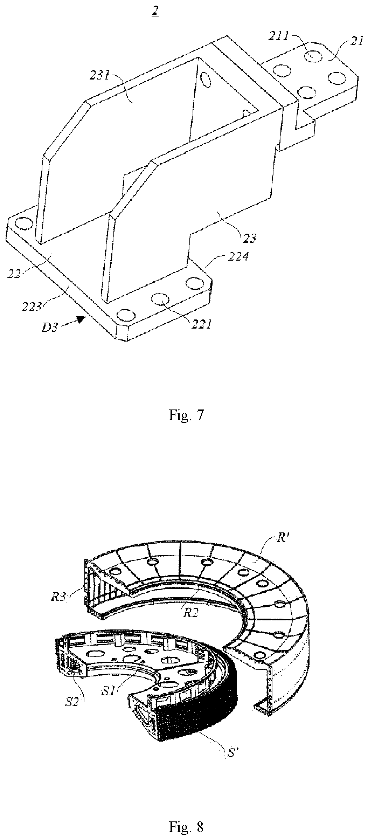

As shown in Fig. 8, with the increasing use demand for a high-power permanent magnet motor, the permanent magnet motor has a diameter that becomes larger and larger to the extent that it exceeds the requirement of the road transport limit, for example, if the diameter exceeds 5m, it is necessary to segment the stator and the rotor before transportation. For example, the stator S includes no less than two stator segments S' disposed in the circumferential direction, the rotor R includes no less than two rotor segments R' disposed in the circumferential direction, and the stator segments S' are disposed coaxially with the rotor segments R' to form a segment module M, wherein the stator segments S ' and rotor segments R' may be equal in number, such as both 6, or may have different numbers, such as the number of stator segments S' being 3 and the number of rotor segments R' being 6.

In order to reduce the difficulty of transporting and assembling the permanent magnet motor having a large diameter, the stator segment S' and the rotor segment R' in the segment module M may be fixed by the first clamping member 1 and/or the second clamping member 2, and the clamping assembly bears the magnetic attraction force between the stator segments S' and the rotor segments R', therefore the segment module M remains stationary in the axial direction, the radial direction, and the circumferential direction and the air gap in the radial direction is constant.

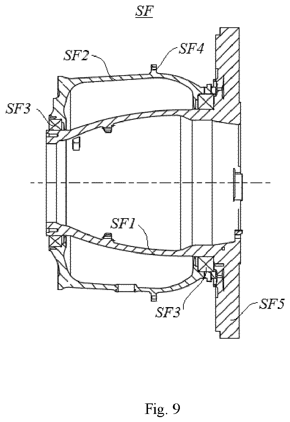

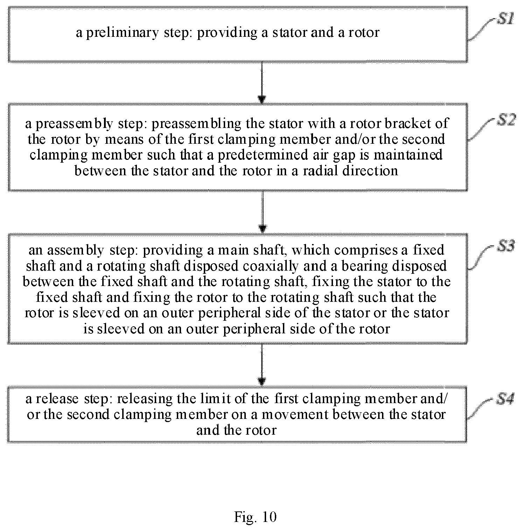

With reference to Figs. 9 and 10 together, an embodiment of the present application also provides a method of assembling a permanent magnet motor including the following steps.

A preliminary step S1: providing a stator S and a rotor R.

A preassembly step S2: preassembling the stator S with a rotor bracket R1 of the rotor R by means of the first clamping members 1 and/or the second clamping members 2 as described above such that a predetermined air gap is maintained between the stator S and the rotor R in the radial direction.

Since the stator S and the rotor R are fixedly connected to each other by the first clamping members 1 and/or the second clamping members 2, it is easier to fabricate the stator S and the rotor R coaxially such that a predetermined gap is maintained between the stator S and the rotor R in the radial direction.

An assembly step S3: providing a main shaft SF, which includes a fixed shaft SF1 and a rotating shaft SF2 disposed coaxially and a bearing SF3 disposed between the fixed shaft SF1 and the rotating shaft SF2, and fixing the stator S to the fixed shaft SF1 and the rotor R to the rotating shaft SF2 such that the rotor R is sleeved on an outer peripheral side of the stator S or the stator S is sleeved on an outer peripheral side of the rotor R.

A fixed shaft flange SF4 is disposed on the outer periphery of the fixed shaft SF1, a first stator flange S1 is disposed on the stator S, and the fixed shaft flange SF4 is connected to the first stator flange S1 to fix the stator S to the fixed shaft SF1.

By taking a case in which the rotating shaft SF2 is disposed on the outer periphery of the fixed shaft SF1 as an example, a rotating shaft flange SF5 is disposed on an outer periphery of the rotating shaft SF2, a first rotor flange R2 is disposed on the rotor R, and the rotating shaft flange SF5 is connected to the first rotor flange R2 to fix the rotor R to the rotating shaft SF2.

A release step S4: releasing the limit of the first clamping member 1 and/or the second clamping member 2 on the movement between the stator S and the rotor R.

As mentioned before, after the permanent magnet motor is assembled, the first clamping members 1 and/or the second clamping members 2 may be moved, rotated, or flipped to other positions relative to the stator in order to release the limit of the first clamping members 1 and/or the second clamping members 2 on the movement between the stator S and the rotor R, thereby meeting the requirement for the use of the permanent magnet motor. When the permanent magnet motor is subsequently reassembled after disassembly and maintenance, the second clamping member 2 can be mounted again to a position where it can connect the stator S with the rotor R so as to facilitate the assembly of the permanent magnet motor. Of course, it is also possible to remove the first clamping members 1 or the second clamping members 2 directly in order to achieve the normal operation of the motor after assembly.

In the method of assembling the permanent magnet motor provided by the present application, the stator S is connected with the rotor bracket R1 by the first clamping members 1 and/or the second clamping members 2, and the clamping assembly bears the magnetic attraction force between the stator S and the rotor R, therefore the stator S and the rotor R are fixed in the axial direction, the radial direction, and the circumferential direction and a constant predetermined air gap is maintained between them in the radial direction, thereby avoiding the influence of the magnetic attraction force between the stator S and the rotor R on the air gap, which improves the convenience of assembling the motor.

As described above, for a large diameter permanent magnet motor, in order to meet the road transport limit, it is necessary to segment the stator and rotor before transportation.

The preliminary step S1 includes:
a step S11: segmenting the stator S into two or more stator segments S' in the circumferential direction; and
a step S12: segmenting the rotor R into two or more rotor segments R' in the circumferential direction.

As shown in Fig. 8, the stator S having a large diameter and the rotor bracket of the rotor R can be segmented by laser cutting, etc., after fabrication at the machining site, and optionally, the number of stator segments S' is the same as that of the rotor segments R' and the radian of the stator segment is equal to that of the corresponding rotor segment. A maximum chord length of the segment module M is less than the road transport limit, which facilitates transportation from the machining site to the assembling site by a transport machine.

Further, the preassembly step S2 includes:
a step S21: assembling the stator segment S' and the rotor segment R' coaxially by means of the first clamping members 1 and/or the second clamping members 2 such that a segment module M is formed and a predetermined air gap is maintained between the stator segment S' and the rotor segment R' in the radial direction; and
a step S22: stitching two or more segment modules M together in the circumferential direction to form a complete stator S and rotor R.

Each stator segment S' in the segment modules M is a curved structure, and may be provided with second stator flanges S2 on both circumferential end surfaces respectively, the adjacent stator segments S' are connected to each other in the circumferential direction by the second stator flange S2, thereby assembling them into a complete stator S.

Similar to the stator segments S', each rotor bracket segment of the rotor segments R' in the segment module M is a curved structure and may be provided with second rotor flanges R3 on both circumferential end surfaces respectively, and the adjacent rotor bracket segments are connected to each other by the second rotor flange R3 in the circumferential direction, thereby assembling two or more rotor segments R into a complete rotor R in the circumferential direction.

Those skilled in the art should understand that the above-mentioned embodiments are all illustrative and not limited. Different technical features appearing in different embodiments can be combined to achieve beneficial effects. Those skilled in the art should be able to understand and implement other modified embodiments of the disclosed embodiments on the basis of studying the drawings, description, and claims. In the claims, the term "comprising" does not exclude other means or steps; when an article is not modified with a quantitative word, it is intend portioned to include one/kind or multiple/kind of articles, and can be used interchangeably with one/kind or multiple/kind of articles; the terms "first" and "second" are used to denote names rather than to indicate any specific order. Any reference signs in the claims should not be understood as limiting the scope of protection. The functions of multiple parts appearing in the claims can be implemented by a single hardware or software module.

## Claims

1. A clamping assembly, for fixing a stator (S) to a rotor (R) of a permanent magnet motor, wherein the clamping assembly comprises:
first clamping members (1), connecting the stator (S) with a rotor bracket (R1) of the rotor (R) on an axial side of the permanent magnet motor, the first clamping members (1) being disposed inside an air gap formed between the stator (S) and the rotor (R) in a radial direction; and
second clamping members (2), connecting the stator (S) with the rotor bracket (R1) of the rotor (R) on the other axial side of the permanent magnet motor,
wherein at least two first clamping members (1) and at least two second clamping members (2) are distributed in a circumferential direction of the stator (S) and the rotor (R) respectively,
wherein the first clamping members (1) each comprises:
a body portion (11), formed as a column structure and comprising a first end portion (11a) and a second end portion (11b) disposed opposite to each other in the axial direction; and
a connecting portion (13), disposed at the second end portion (11b), the first clamping members (1) each being connected to the stator (S) by the connecting portion (13);
wherein the first clamping members (1) each further comprises:
a flange portion (12), disposed on an outer peripheral surface of the body portion (11) corresponding to the first end portion (11a), the first clamping members (1) each being connected to the rotor bracket (R1) by the flange portion (12);
wherein a maximum length (L1) of each of the first clamping members (1) in the axial direction is equal to a distance between an end surface of the flange portion (12) and an end surface of the connecting portion (13).

2. The clamping assembly according to claim 1, wherein the first clamping members (1) limit a relative movement between the stator (S) and the rotor (R) in the radial direction, an axial direction, and the circumferential direction.

3. The clamping assembly according to claim 1, wherein the body portion (11) is a hollow column comprising an accommodating cavity, the first end portion (11a) is provided with an opening (111) in communication with the accommodating cavity, the second end portion (11b) is provided with a bottom portion (112) for forming the accommodating cavity, and the connecting portion (13) is provided to protrude outward from the bottom portion (112) in the axial direction.

4. The clamping assembly according to claim 1, wherein the flange portion (12) is provided with first positioning holes (121) in the circumferential direction, the outer peripheral surface of the body portion (11) has a first diameter (D1), the rotor bracket (R1) is provided with a mounting hole (R11) having the first diameter (D1), the body portion (11) is inserted into the mounting hole (R11), and the flange portion (12) is connected to the rotor bracket (R1) by the first positioning holes (121).

5. The clamping assembly according to claim 1 or 3, wherein the connecting portion (13) comprises a first surface (131) and a second surface (132) disposed opposite to each other, the first surface (131) is an arc-shaped surface recessed inward and having a second diameter (D2) and/or the second surface (132) is an arc-shaped surface protruding outward and having a second diameter (D2), the connecting portion (13) is further provided with a second positioning hole (133) in the axial direction, the stator (S) is provided with a first mounting surface (S11) having the second diameter (D2), and each of the first clamping members (1) is matched with the first mounting surface (S11) via the first surface (131) or the second surface (132) and is connected with the stator (S) via the second positioning hole (133).

6. The clamping assembly according to claim 1, wherein the second clamping members (2) are disposed in the vicinity of the air gap formed between the stator (S) and the rotor (R) in the radial direction and limit a relative movement between the stator (S) and the rotor (R) in the radial direction, an axial direction, and the circumferential direction.

7. The clamping assembly according to claim 1, wherein the second clamping members (2) each comprises:
a main body portion (23);
a first fixing portion (21), connected to the main body portion (23) and formed as a plate member, the second clamping members (2) each being connected to the rotor bracket (R1) of the rotor (R) by the first fixing portion (21); and
a second fixing portion, connected to the main body portion (23) and formed as a plate member parallel to and spaced apart from the first fixing portion (21), the second clamping members (2) each being connected to the stator (S) by the second fixing portion.

8. The clamping assembly according to claim 7, wherein the second fixing portion comprises a third surface and a fourth surface disposed opposite to each other, the third surface is an arc-shaped surface recessed inward and having a third diameter (D3) and/or the fourth surface is an arc-shaped surface protruding outward and having a third diameter (D3), the second fixing portion is further provided with a third positioning hole, the stator (S) is provided with a second mounting surface having the third diameter (D3), and each of the second clamping members (2) is matched with the second mounting surface via the third surface or the fourth surface and is connected to the stator (S) via the third positioning hole.

9. The clamping assembly according to claim 7, wherein the first fixing portion (21) is provided with a fourth positioning hole (211), and the first fixing portion (21) is connected with the rotor bracket (R1) by the fourth positioning hole (211); or
wherein a maximum spacing distance (L2) between the first fixing portion (21) and the second fixing portion is equal to a distance between an end surface of the flange portion (12) and an end surface of the connection portion (13); or
wherein the main body portion (23) is provided with a weight reduction groove (231).

10. A method of assembling a permanent magnet motor, comprising:
a preliminary step: providing a stator (S) and a rotor (R);
a preassembly step: preassembling the stator (S) with a rotor bracket (R1) of the rotor (R) by means of the clamping assembly according to any one of claims 1 to 9, such that a predetermined air gap is maintained between the stator (S) and the rotor (R) in a radial direction;
an assembly step: providing a main shaft (SF), which comprises a fixed shaft (SF1) and a rotating shaft (SF2) disposed coaxially and a bearing (SF3) disposed between the fixed shaft (SF1) and the rotating shaft (SF2), fixing the stator (S) to the fixed shaft (SF1) and fixing the rotor (R) to the rotating shaft (SF2) such that the rotor (R) is sleeved on an outer peripheral side of the stator (S) or the stator (S) is sleeved on an outer peripheral side of the rotor (R); and
a release step: releasing the limit of the first clamping member (1) and/or the second clamping member (2) on a movement between the stator (S) and the rotor (R).

11. The assembling method according to claim 10, wherein the preliminary step further comprises:
segmenting the stator (S) into two or more stator segments (S') in a circumferential direction; and
segmenting the rotor (R) into two or more rotor segments (R') in the circumferential direction; or
wherein the preassembly step comprises:
assembling each of the stator segments (S') and the corresponding rotor segment (R') coaxially by means of the first clamping member (1) and/or the second clamping member (2) such that segment modules (M) are formed and a predetermined air gap is maintained between each of the stator segments (S') and the corresponding rotor segment (R') in the radial direction; and
splicing two or more segment modules (M) in the circumferential direction to form the complete stator (S) and the complete rotor (R).

## Patentansprüche

1. Klemmanordnung zum Befestigen eines Stators (S) an einem Rotor (R) eines Permanentmagnetmotors, wobei die Klemmanordnung Folgendes umfasst:
erste Klemmelemente (1), die den Stator (S) mit einer Rotorhalterung (R1) des Rotors (R) an einer axialen Seite des Permanentmagnetmotors verbinden, wobei die ersten Klemmelemente (1) innerhalb eines Luftspalts angeordnet sind, der zwischen dem Stator (S) und dem Rotor (R) in radialer Richtung ausgebildet ist; und
zweite Klemmelemente (2), die den Stator (S) mit der Rotorhalterung (R1) des Rotors (R) an der anderen axialen Seite des Permanentmagnetmotors verbinden,
wobei mindestens zwei erste Klemmelemente (1) und mindestens zwei zweite Klemmelemente (2) in einer Umfangsrichtung des Stators (S) bzw. des Rotors (R) verteilt sind, wobei die ersten Klemmelemente (1) jeweils Folgendes umfassen:
einen Körperabschnitt (11), der als Säulenstruktur ausgebildet ist und einen ersten Endabschnitt (11a) und einen zweiten Endabschnitt (11b) umfasst, die in axialer Richtung gegenüber voneinander angeordnet sind; und
einen Verbindungsabschnitt (13), der an dem zweiten Endabschnitt (11b) angeordnet ist,
wobei die ersten Klemmelemente (1) durch den Verbindungsabschnitt (13) jeweils mit dem Stator (S) verbunden sind;
wobei die ersten Klemmelemente (1) ferner jeweils Folgendes umfassen:
einen Flanschabschnitt (12), der an einer äußeren peripheren Oberfläche des Körperabschnitts (11) entsprechend dem ersten Endabschnitt (11a) angeordnet ist, wobei die ersten Klemmelemente (1) durch den Flanschabschnitt (12) jeweils mit der Rotorhalterung (R1) verbunden sind;
wobei eine maximale Länge (L1) jedes der ersten Klemmelemente (1) in der axialen Richtung gleich einer Entfernung zwischen einer Endoberfläche des Flanschabschnitts (12) und einer Endoberfläche des Verbindungsabschnitts (13) ist.

2. Klemmanordnung nach Anspruch 1, wobei die ersten Klemmelemente (1) eine relative Bewegung zwischen dem Stator (S) und dem Rotor (R) in der radialen Richtung, einer axialen Richtung und der Umfangsrichtung einschränkt.

3. Klemmanordnung nach Anspruch 1, wobei der Körperabschnitt (11) eine hohle Säule ist, die einen Unterbringungshohlraum umfasst, der erste Endabschnitt (11a) mit einer Öffnung (111) in Verbindung mit dem Unterbringungshohlraum versehen ist, der zweite Endabschnitt (11b) mit einem Bodenabschnitt (112) zum Ausbilden des Unterbringungshohlraums versehen ist und der Verbindungsabschnitt (13) derart bereitgestellt ist, dass er von dem Bodenabschnitt (112) in axialer Richtung vorsteht.

4. Klemmanordnung nach Anspruch 1, wobei der Flanschabschnitt (12) mit ersten Positionierungslöchern (121) in der Umfangsrichtung versehen ist, die äußere periphere Oberfläche des Körperabschnitts (11) einen ersten Durchmesser (D1) aufweist, die Rotorhalterung (R1) mit einem Anbringungsloch (R11) mit dem ersten Durchmesser (D1) versehen ist, der Körperabschnitt (11) in das Anbringungsloch (R11) eingesetzt ist und der Flanschabschnitt (12) durch die ersten Positionierungslöcher (121) mit der Rotorhalterung (R1) verbunden ist.

5. Klemmanordnung nach Anspruch 1 oder 3, wobei der Verbindungsabschnitt (13) eine erste Oberfläche (131) und eine zweite Oberfläche (132) umfasst, die gegenüber voneinander angeordnet sind, die erste Oberfläche (131) eine bogenförmige Oberfläche ist, die nach innen ausgespart ist und einen zweiten Durchmesser (D2) aufweist, und/oder die zweite Oberfläche (132) eine bogenförmige Oberfläche ist, die nach außen vorsteht und einen zweiten Durchmesser (D2) aufweist, der Verbindungsabschnitt (13) ferner mit einem zweiten Positionierungsloch (133) in axialer Richtung versehen ist, der Stator (S) mit einer ersten Anbringungsoberfläche (S11) mit dem zweiten Durchmesser (D2) versehen ist und jedes der ersten Klemmelemente (1) über die erste Oberfläche (131) oder die zweite Oberfläche (132) auf die erste Anbringungsoberfläche (S11) abgestimmt ist und mit dem Stator (S) über das zweite Positionierungsloch (133) verbunden ist.

6. Klemmanordnung nach Anspruch 1, wobei die zweiten Klemmelemente (2) in der Nähe des Luftspalts angeordnet sind, der zwischen dem Stator (S) und dem Rotor (R) in radialer Richtung ausgebildet ist, und eine relative Bewegung zwischen dem Stator (S) und dem Rotor (R) in der radialen Richtung, einer axialen Richtung und der Umfangsrichtung einzuschränken.

7. Klemmanordnung nach Anspruch 1, wobei die zweiten Klemmelemente (2) jeweils Folgendes umfassen:
einen Hauptkörperabschnitt (23);
einen ersten Befestigungsabschnitt (21), der mit dem Hauptkörperabschnitt (23) verbunden ist und als Plattenelement ausgebildet ist, wobei die zweiten Klemmelemente (2) durch den ersten Befestigungsabschnitt (21) jeweils mit der Rotorhalterung (R1) des Rotors (R) verbunden sind; und
einen zweiten Befestigungsabschnitt, der mit dem Hauptkörperabschnitt (23) verbunden ist und als Plattenelement parallel zu und beabstandet von dem ersten Befestigungsabschnitt (21) ausgebildet ist, wobei die zweiten Klemmelemente (2) jeweils durch den zweiten Befestigungsabschnitt mit dem Stator (S) verbunden sind.

8. Klemmanordnung nach Anspruch 7, wobei der zweite Befestigungsabschnitt eine dritte Oberfläche und eine vierte Oberfläche umfasst, die gegenüber voneinander angeordnet sind, die dritte Oberfläche eine bogenförmige Oberfläche ist, die nach innen ausgespart ist und einen dritten Durchmesser (D3) aufweist, und/oder die vierte Oberfläche eine bogenförmige Oberfläche ist, die nach außen vorsteht und einen dritten Durchmesser (D3) aufweist, der zweite Befestigungsabschnitt ferner mit einem dritten Positionierungsloch versehen ist, der Stator (S) mit einer zweiten Anbringungsoberfläche mit dem dritten Durchmesser (D3) versehen ist und jedes der zweiten Klemmelemente (2) über die dritte Oberfläche oder die vierte Oberfläche auf die zweite Anbringungsoberfläche abgestimmt ist und über das dritte Positionierungsloch mit dem Stator (S) verbunden ist.

9. Klemmanordnung nach Anspruch 7, wobei der erste Befestigungsabschnitt (21) mit einem vierten Positionierungsloch (211) versehen ist und der erste Befestigungsabschnitt (21) durch das vierte Positionierungsloch (211) mit der Rotorhalterung (R1) verbunden ist; oder wobei eine maximale Beabstandungsentfernung (L2) zwischen dem ersten Befestigungsabschnitt (21) und dem zweiten Befestigungsabschnitt gleich einer Entfernung zwischen einer Endoberfläche des Flanschabschnitts (12) und einer Endoberfläche des Verbindungsabschnitts (13) ist; oder
wobei der Hauptkörperabschnitt (23) mit einer Gewichtsverringerungsnut (231) versehen ist.

10. Verfahren zum Montieren eines Permanentmagnetmotors, umfassend:
einen vorbereitenden Schritt: Bereitstellen eines Stators (S) und eines Rotors (R);
einen Vormontageschritt: Vormontieren des Stators (S) an einer Rotorhalterung (R1) des Rotors (R) mittels der Klemmanordnung nach einem der Ansprüche 1 bis 9, sodass ein vorab festgelegter Luftspalt zwischen dem Stator (S) und dem Rotor (R) in radialer Richtung beibehalten wird;
einen Montageschritt: Bereitstellen einer Hauptwelle (SF), die eine feste Welle (SF1) und eine rotierende Welle (SF2) umfasst, die koaxial angeordnet sind, und eines Lager (SF3), das zwischen der festen Welle (SF1) und der rotierenden Welle (SF2) angeordnet ist, Befestigen des Stators (S) an der festen Welle (SF1) und Befestigen des Rotors (R) an der rotierenden Welle (SF2), sodass der Rotor (R) auf einer äußeren peripheren Seite des Stators (S) sitzt oder der Stator (S) auf einer äußeren peripheren Seite des Rotors (R) sitzt; und
einen Löseschritt: Lösen der Einschränkung des ersten Klemmelements (1) und/oder des zweiten Klemmelements (2) für eine Bewegung zwischen dem Stator (S) und dem Rotor (R).

11. Montageverfahren nach Anspruch 10, wobei der vorbereitende Schritt ferner Folgendes umfasst:
Segmentieren des Stators (S) in zwei oder mehr Statorsegmente (S') in Umfangsrichtung; und
Segmentieren des Rotors (R) in zwei oder mehr Rotorsegmente (R') in Umfangsrichtung;
oderwobei der Vormontageschritt Folgendes umfasst:
Montieren jedes der Statorsegmente (S') und des entsprechenden Rotorsegments (R') koaxial mittels des ersten Klemmelements (1) und/oder des zweiten Klemmelements (2), sodass die Segmentmodule (M) ausgebildet werden und ein vorab festgelegter Luftspalt zwischen jedem der Statorsegmente (S') und dem entsprechenden Rotorsegment (R') in radialer Richtung beibehalten wird; und
Spleißen von zwei oder mehr Segmentmodulen (M) in Umfangsrichtung, um den vollständigen Stator (S) und den vollständigen Rotor (R) auszubilden.

## Revendications

1. Ensemble de serrage, destiné à fixer un stator (S) à un rotor (R) d'un moteur à aimant permanent, dans lequel l'ensemble de serrage comprend :
des premiers éléments de serrage (1), reliant le stator (S) à un support de rotor (R1) du rotor (R) sur un côté axial du moteur à aimant permanent, les premiers éléments de serrage (1) étant disposés à l'intérieur d'un entrefer formé entre le stator (S) et le rotor (R) dans une direction radiale ; et
des seconds éléments de serrage (2), reliant le stator (S) au support de rotor (R1) du rotor (R) sur l'autre côté axial du moteur à aimant permanent,
dans lequel au moins deux des premiers éléments de serrage (1) et au moins deux des seconds éléments de serrage (2) sont répartis dans une direction circonférentielle du stator (S) et du rotor (R) respectivement,
dans lequel les premiers éléments de serrage (1) comprennent chacun :
une partie de corps (11), formée sous la forme d'une structure de colonne et comprenant une première partie d'extrémité (11a) et une seconde partie d'extrémité (11b) disposées à l'opposé l'une de l'autre dans la direction axiale ; et
une partie de liaison (13), disposée au niveau de la seconde partie d'extrémité (11b), les premiers éléments de serrage (1) étant chacun reliés au stator (S) par la partie de liaison (13) ;
dans lequel
les premiers éléments de serrage (1) comprennent chacun en outre :
une partie de bride (12), disposée sur une surface périphérique extérieure de la partie de corps (11) correspondant à la première partie d'extrémité (11a), les premiers éléments de serrage (1) étant chacun reliés au support de rotor (R1) par la partie de bride (12) ;
dans lequel une longueur maximale (L1) de chacun des premiers éléments de serrage (1) dans la direction axiale est égale à une distance entre une surface d'extrémité de la partie de bride (12) et une surface d'extrémité de la partie de liaison (13).

2. Ensemble de serrage selon la revendication 1, dans lequel les premiers éléments de serrage (1) limitent un mouvement relatif entre le stator (S) et le rotor (R) dans la direction radiale, une direction axiale et la direction circonférentielle.

3. Ensemble de serrage selon la revendication 1, dans lequel la partie de corps (11) est une colonne creuse comprenant une cavité de logement, la première partie d'extrémité (11a) est dotée d'une ouverture (111) en communication avec la cavité de logement, la seconde partie d'extrémité (11b) est dotée d'une partie inférieure (112) pour former la cavité de logement, et la partie de liaison (13) est prévue pour faire saillie vers l'extérieur de la partie inférieure (112) dans la direction axiale.

4. Ensemble de serrage selon la revendication 1, dans lequel la partie de bride (12) est dotée de premiers orifices de positionnement (121) dans la direction circonférentielle, la surface périphérique extérieure de la partie de corps (11) a un premier diamètre (D1), le support de rotor (R1) est doté d'un orifice de montage (R11) ayant le premier diamètre (D1), la partie de corps (11) est insérée dans l'orifice de montage (R11) et la partie de bride (12) est reliée au support de rotor (R1) par les premiers orifices de positionnement (121).

5. Ensemble de serrage selon la revendication 1 ou 3, dans lequel la partie de liaison (13) comprend une première surface (131) et une deuxième surface (132) disposées de manière opposée l'une à l'autre, la première surface (131) est une surface en forme d'arc évidée vers l'intérieur et ayant un deuxième diamètre (D2) et/ou la deuxième surface (132) est une surface en forme d'arc faisant saillie vers l'extérieur et ayant un deuxième diamètre (D2), la partie de liaison (13) est en outre dotée d'un deuxième orifice de positionnement (133) dans la direction axiale, le stator (S) est doté d'une première surface de montage (S11) ayant le deuxième diamètre (D2) et chacun des premiers éléments de serrage (1) est associé à la première surface de montage (S11) par le biais de la première surface (131) ou la deuxième surface (132) et est relié au stator (S) par le biais du deuxième orifice de positionnement (133).

6. Ensemble de serrage selon la revendication 1, dans lequel les seconds éléments de serrage (2) sont disposés à proximité de l'entrefer formé entre le stator (S) et le rotor (R) dans la direction radiale et limitent un mouvement relatif entre le stator (S) et le rotor (R) dans la direction radiale, une direction axiale et la direction circonférentielle.

7. Ensemble de serrage selon la revendication 1, dans lequel les seconds éléments de serrage (2) comprennent chacun :
une partie de corps principale (23) ;
une première partie de fixation (21), reliée à la partie de corps principale (23) et formée sous la forme d'un élément de plaque, les seconds éléments de serrage (2) étant chacun reliés au support de rotor (R1) du rotor (R) par la première partie de fixation (21) ; et
une seconde partie de fixation, reliée à la partie de corps principale (23) et formée sous la forme d'un élément de plaque parallèle à la première partie de fixation (21) et espacé de cette dernière, les seconds éléments de serrage (2) étant chacun reliés au stator (S) par la seconde partie de fixation.

8. Ensemble de serrage selon la revendication 7, dans lequel la seconde partie de fixation comprend une troisième surface et une quatrième surface disposées de manière opposée l'une à l'autre, la troisième surface est une surface en forme d'arc évidée vers l'intérieur et ayant un troisième diamètre (D3) et/ou la quatrième surface est une surface en forme d'arc faisant saillie vers l'extérieur et ayant un troisième diamètre (D3), la seconde partie de fixation est en outre dotée d'un troisième orifice de positionnement, le stator (S) est doté d'une seconde surface de montage ayant le troisième diamètre (D3) et chacun des seconds éléments de serrage (2) est associé à la seconde surface de montage par le biais de la troisième surface ou la quatrième surface et est relié au stator (S) par le biais du troisième orifice de positionnement.

9. Ensemble de serrage selon la revendication 7, dans lequel la première partie de fixation (21) est dotée d'un quatrième orifice de positionnement (211) et la première partie de fixation (21) est reliée au support de rotor (R1) par le quatrième orifice de positionnement (211) ; ou
dans lequel une distance d'espacement maximal (L2) entre la première partie de fixation (21) et la seconde partie de fixation est égale à une distance entre une surface d'extrémité de la partie de bride (12) et une surface d'extrémité de la partie de liaison (13) ; ou
dans lequel la partie de corps principale (23) est dotée d'une rainure de réduction de poids (231).

10. Procédé destiné à assembler un moteur à aimant permanent, comprenant :
une étape préliminaire : fournir un stator (S) et un rotor (R) ;
une étape de préassemblage : préassembler le stator (S) avec un support de rotor (R1) du rotor (R) à l'aide de l'ensemble de serrage selon l'une quelconque des revendications 1 à 9, de telle sorte qu'un entrefer prédéterminé soit maintenu entre le stator (S) et le rotor (R) dans une direction radiale ;
une étape d'assemblage : fournir un arbre principal (SF), qui comprend un arbre fixe (SF1) et un arbre rotatif (SF2) disposé de manière coaxiale et un palier (SF3) disposé entre l'arbre fixe (SF1) et l'arbre rotatif (SF2), fixant le stator (S) à l'arbre fixe (SF1) et fixant le rotor (R) à l'arbre rotatif (SF2) de telle sorte que le rotor (R) soit chemisé sur un côté périphérique extérieur du stator (S) ou le stator (S) soit chemisé sur un côté périphérique extérieur du rotor (R) ; et
une étape de libération : libérer la limite du premier élément de serrage (1) et/ou du second élément de serrage (2) sur un mouvement entre le stator (S) et le rotor (R).

11. Procédé d'assemblage selon la revendication 10, dans lequel l'étape préliminaire comprend en outre :
segmenter le stator (S) en deux segments de stator ou plus (S') dans une direction circonférentielle ; et
segmenter le rotor (R) en deux segments de rotor ou plus (R') dans la direction circonférentielle ; ou
dans lequel l'étape de préassemblage comprend :
assembler chacun des segments de stator (S') et le segment de rotor correspondant (R') de manière coaxiale à l'aide du premier élément de serrage (1) et/ou du second élément de serrage (2) de telle sorte que des modules de segments (M) soient formés et un entrefer prédéterminé soit maintenu entre chacun des segments de stator (S') et le segment de rotor correspondant (R') dans la direction radiale ; et
joindre deux modules de segments ou plus (M) dans la direction circonférentielle pour former le stator complet (S) et le rotor complet (R).
